# FASCICULE DE BREVET EUROPEEN

(11) **EP 1 522 476 B1**
(45) Date de publication et mention de la délivrance du brevet: **19.08.2009**
(21) Numéro de dépôt: 04023660.6
(22) Date de dépôt: 05.10.2004
(51) Int. Cl.: B60T 13/567

(54) **Servomoteur pneumatique d'assistance au freinage a couvercle resistant**
Unterdruckbremskraftverstärker mit verstärktem Gehäuse
pneumatic brake booster with reinforced casing

(30) Priorité: 06.10.2003 FR 0311781
(43) Date de publication de la demande: 13.04.2005
(73) Titulaire: ROBERT BOSCH GMBH, 70442 Stuttgart (DE)
(72) Inventeur: Ferreira, Rui, 92360 Meudon la Fôret (FR); Leboisne, Cédric, 75011 Paris (FR)
(74) Mandataire: Hurwic, Aleksander Wiktor

(56) Documents cités:
- EP-A- 0 319 359
- DE-A- 3 106 241
- US-A- 4 353 291
- US-A- 4 466 246
- US-A- 5 537 821

## Description

La présente invention concerne les servomoteurs pneumatiques d'assistance au freinage.

On connaît le fonctionnement à la base de ces servomoteurs, basé sur la présence de deux chambres séparées par une paroi mobile étanche, cette paroi étant déplaçable par un différentiel de pression entre les deux chambres. Un exemple d'un tel servomoteur muni d'une structure de renforcement est décrit dans US 5 537 821.

Lors d'une action sur la pédale de frein par le conducteur du véhicule, la traction du câble attaché à la pédale, dès son amorce, déclenche l'activation du servofrein pneumatique (ou servomoteur pneumatique d'assistance au freinage) qui amplifie la sollicitation sur le câble à destination du maître cylindre commandant lui-même les organes de freinage associés aux roues.

Un tel servomoteur présente typiquement la forme d'un disque épais, son épaisseur étant égale à la somme des épaisseurs des deux chambres.

En raison notamment d'une telle forme, les parois du servomoteur sont soumises à des forces de pression sur des surfaces importantes, bien que les épaisseurs de parois soient faibles pour des raisons de légèreté du système.

On constate donc des déformations alternées dues au remplissage et à la vidange pneumatique du servomoteur (plus précisément de la chambre arrière de ce dernier).

Pour la fixation du servomoteur sur le tablier d'un véhicule, on utilise typiquement des tirants attachés au couvercle du servomoteur, c'est à dire à sa partie faisant face au tablier (côté chambre arrière). Ces mêmes tirants viennent parfois fixer au tablier également le cylindre du servomoteur, c'est à dire la paroi de ce dernier faisant face au couvercle.

Les déformations alternées du servomoteur entraînent typiquement des concentrations de contraintes au contact des tirants dans la zone entourant une collerette du tirant formant ancrage de ce dernier sur le couvercle. Ces concentrations de contrainte prennent également place en bordure d'une paroi tronconique venant typiquement entourer le servomoteur.

Pour éviter un mode de déformation générant de telles contraintes, on a certes proposé d'aménager des renforts sur le cylindre, étant entendu que la rigidité du cylindre a un certain impact sur les déformations du couvercle.

On a également proposé de remplacer les tirants par d'autres modes de fixation.

Enfin, on a proposé d'ajouter des fixations supplémentaires pour répartir les points d'ancrage.

Ces solutions s'avèrent relativement coûteuses, et d'une réelle complexité de mise en oeuvre.

Les résultats en termes d'amélioration de la fiabilité du système de freinage s'avèrent en outre peu satisfaisants.

L'invention vise à palier ces inconvénients grâce à un servomoteur pneumatique d'assistance au freinage pour véhicule automobile comprenant un couvercle présentant une zone de fixation et au moins un organe de fixation du couvercle à un support, caractérisé en ce que la zone de fixation a une forme non plane et est déformable élastiquement pour prendre une forme plane.

On propose également selon l'invention un procédé de montage d'un servomoteur pneumatique d'assistance au freinage sur un support d'un véhicule automobile, le procédé comprenant les étapes consistant à :
- fournir un servomoteur comprenant un couvercle ayant une première forme ;
- fixer le couvercle au support de façon à lui donner une deuxième forme différente de la première forme afin de générer une précontrainte dans le couvercle.

On propose aussi un ensemble pour véhicule automobile comprenant un support et un servomoteur pneumatique d'assistance au freinage qui comporte un couvercle, caractérisé en ce que le support et le couvercle sont agencés de sorte qu'une fixation du couvercle au support donne au couvercle une forme finale après fixation différente d'une forme initiale du couvercle avant fixation.

On propose également selon l'invention un véhicule automobile comprenant un support et un système de freinage incluant un servomoteur pneumatique d'assistance au freinage, le servomoteur comportant un couvercle fixé au support, caractérisé en ce que le couvercle présente une précontrainte de sorte qu'il présente une forme primaire lorsqu'il est fixé au support et qu'il prend spontanément une forme secondaire différente de la forme primaire lorsqu'on le démonte du support.

D'autres caractéristiques, buts et avantages de l'invention apparaîtront à la lecture de la description détaillée qui va suivre, faite en référence aux figures annexées sur lesquelles :
- la figure 1 est une vue en perspective d'un servomoteur selon l'invention ;
- la figure 2 est une vue de dessus de ce même servomoteur ;
- la figure 3 est une vue en coupe longitudinale de ce même servomoteur, dans le demi-plan EE dans sa partie supérieure, dans le demi-plan AA dans sa partie inférieure et en position montée sur un tablier, les plans AA et EE étant indiqués sur la figure 2.

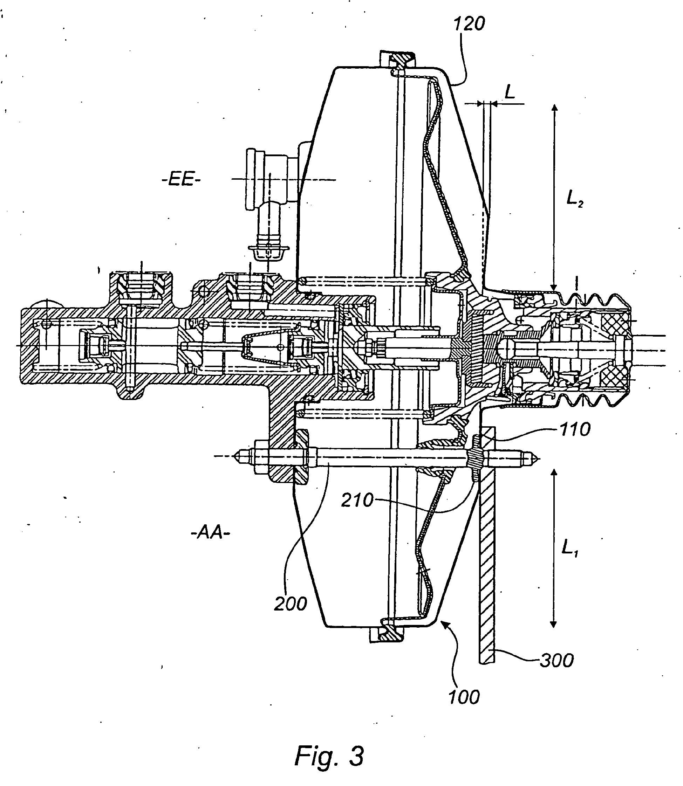

Tel que représenté dans la partie inférieure de cette figure 3, le couvercle 100 du servomoteur pneumatique d'assistance au freinage (servofrein) présente une forme générale similaire à celles connues. En effet, il se présente, selon cette coupe, sous la forme typique d'un plateau central 110 bordé par une paroi tronconique 120. Le plateau central 110 forme un orifice traversé par un tirant 200, tirant attaché au couvercle 100 par les bordures de cet orifice.

Pour cela, le tirant présente une collerette 210 venant recouvrir les bords de l'orifice à l'intérieur du servomoteur.

Avec un couvercle classique, c'est à dire présentant cette même coupe sur l'ensemble de son pourtour, on constate une concentration de contraintes au niveau de cette collerette 210 et également au début de la paroi tronconique qui lui est adjacent.

En effet, là ou se trouve le tirant 200, l'aspiration interne appliquée sur la paroi considérée ne peut ici se répartir qu'entre l'emplacement du tirant et la bordure périphérique du servomoteur. Dans les zones dépourvues de tirants au contraire, la pression se répartit sur l'ensemble de la paroi interne considérée.

Dans le plan des tirants, la partie centrale de la paroi est plaquée contre le tablier de manière rigide. Par contre, la paroi du servomoteur sur une distance L1 subit les contraintes de remplissage et de vidange de la chambre arrière, le raccord entre le plateau central 110 et la paroi conique 120 connaît une concentration de contraintes et joue le rôle d'une charnière.

Dans la zone du servofrein située vers son centre au delà du tirant 200, la paroi est plaquée contre le tablier du véhicule, n'autorisant pratiquement aucune déformation.

Ainsi, les contraintes sont d'autant plus fortes qu'on se rapproche d'un plan contenant un tirant, les contraintes se répartissant sur une zone extérieure de largeur L1 particulièrement faible.

Au contraire, elles se répartissent, pour le reste du couvercle, sur une longueur L2 nettement plus importante.

Pour soulager les contraintes concentrées autour du tirant 200, on propose, dans le cadre du présent mode de réalisation, une forme particulière du plateau central 110, représentée notamment en partie supérieure de la figure 3.

Cette partie supérieure correspond à une coupe du couvercle selon un plan perpendiculaire à celui passant par les tirants (deux tirants 200 diamétralement opposés ici).

Dans les zones situées de part et d'autre du plan des tirants, on a ménagé à chaque fois une pente s'élevant progressivement en éloignement de ce plan.

Sur la figure 3, cette pente 115 est représentée en traits pleins, tandis que des traits pointillés représentent la forme classique horizontale dans cette même zone.

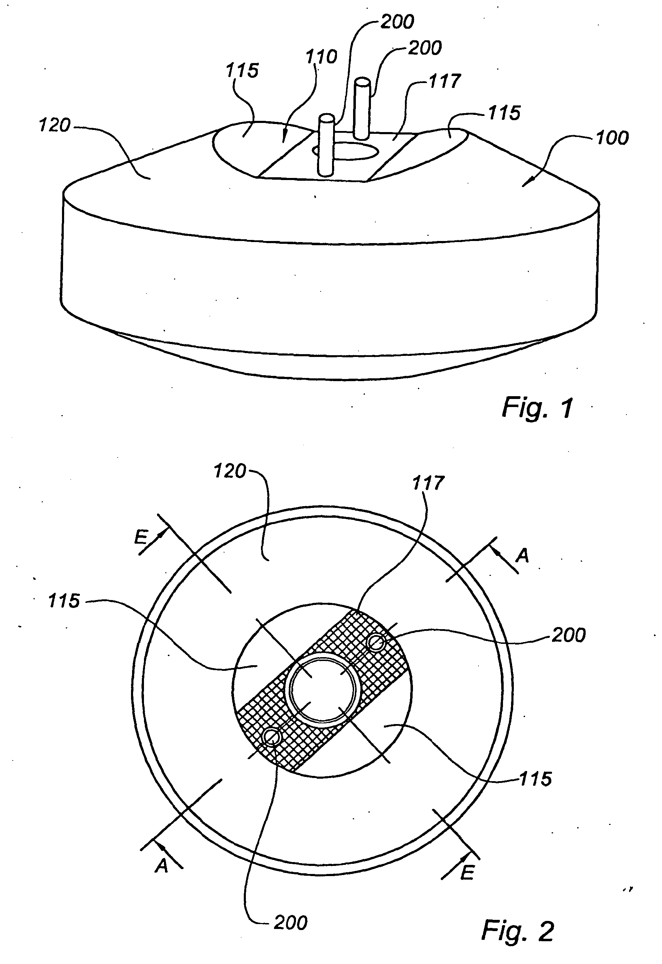

Ici, et tel que représenté sur la figure 1, on ménage donc, sur deux côtés opposés et symétriques dans le plateau central 110, deux versants obliques 115 bordant un fond plat. Le plateau central 110 se répartit donc ici en trois zones, constituées respectivement d'une bande centrale plane 117 et parallèle au plan principal du servomoteur, et deux versants 115 à pente relevée de part et d'autre de la bande centrale 117. L'ensemble forme donc une gorge transversale à fond plat.

Ces versants 115 viennent rejoindre la partie tronconique 110 par leur pourtour, chacun délimité ainsi par des arêtes en arcs de cercle.

Les deux tirants 200 sont fixés à la bande centrale 117 formant le fond de la gorge, dans des positions diamétralement opposées par rapport à un axe central du servomoteur.

Ainsi positionnés, les tirants 200 vont produire sur cette bande centrale 117 une traction vers l'extérieur (à savoir, vers la droite sur la figure 3), propre à venir la plaquer contre le tablier du véhicule. Une force de serrage par simple vissage des tirants sur le tablier (référencé 300 sur la figure 3) est suffisante à cet effet compte tenu de la faible épaisseur des parois du couvercle. Compte tenu de la très légère pente des versants, ceux-ci présentent une aptitude à une telle déformation.

Ainsi, lors du serrage, le fond de la gorge avance vers le tablier, tandis que les deux versants s'alignent contre le tablier.

Au final, les deux versants et la bande centrale se trouvent dans un même plan, tous plaqués contre le tablier. Dans cette position finale, la légère pente des versants en direction du tablier (représentée par la cote L sur la figure 3) a disparu, donnant naissance à des contraintes permanentes dans le couvercle.

Ces contraintes permanentes maintiennent une poussée permanente des versants ou ailettes contre le tablier, c'est à dire un maintien par précontrainte du plateau central 110 dans les zones éloignées latéralement du plan des tirants.

Une contrainte permanente (précontrainte) existe donc, à laquelle viennent s'ajouter les contraintes alternées de fonctionnement.

Avec une remontée L sensiblement égale à l'épaisseur de paroi du couvercle, il s'avère que la précontrainte ainsi générée fournit une force résultante qui équivaut aux résultantes alternées des forces générées par le fonctionnement du servomoteur. Les forces de fonctionnement sont, de ce fait, insuffisantes pour décoller une quelconque partie du plateau central d'appui 110 vis à vis du tablier. Aucune déformation gênante ne prend donc place dans le plateau central 110, ni à distance des tirants 200, ni à proximité des tirants.

Les déformations alternées et contraintes concentrées ne peuvent donc plus apparaître.

Bien qu'une précontrainte suffisante pour générer une telle résultante soit possible dans de multiples configurations, on préfère ici une précontrainte qui soit maximale selon une direction perpendiculaire au plan des tirants, précontrainte devenant de plus en plus faible lorsque l'on considère des directions se rapprochant progressivement du plan des tirants.

Ainsi, la précontrainte générée est principalement orientée perpendiculairement aux contraintes alternées les plus gênantes, c'est à dire celles situées dans le plan des tirants, de sorte qu'en fonctionnement, la somme des contraintes se répartit harmonieusement dans l'ensemble du couvercle, selon des directions harmonieusement réparties sur 360° autour d'un axe central.

En d'autres termes, on choisit avantageusement des pentes progressives s'élevant au fur et à mesure d'un éloignement à 90° du plan des deux tirants.

La valeur de l'élévation de la pente diminue donc a contrario, progressivement de l'extérieur du plateau d'appui en direction des tirants.

En d'autres termes, une précontrainte par des versants 115 bordant le plan qui contient les tirants s'avère favoriser une répartition des contraintes à 360° autour de l'axe central du servomoteur, évitant les concentrations de contraintes.

Pour un aplanissement efficace des deux versants 115 à la fixation, on préfère une gorge qui traverse totalement la partie centrale d'appui 110 du couvercle. Une telle disposition permet un travail de la gorge à la manière de l'ouverture d'un livre.

Concernant les têtes de la pente et notamment la valeur de la hauteur L au sommet des versants, une configuration optimale consiste à choisir L pour que l'effort résultant de la déformation, c'est à dire l'effort appliqué sur les tirants, soit supérieur à l'effort provoqué par la différence de pression de part et d'autre du couvercle en fonctionnement.

Dans ce cas, le couvercle s'avère immobile au moins sur la longueur L1 précédemment citée. Le choix d'une telle résultante élimine donc les surcontraintes et fissures dans cette zone de concentration de contraintes.

Pour un servomoteur de 250 mm de diamètre et une épaisseur de tôle d'acier de 0,7 mm, on adopte préférentiellement une hauteur initiale L à l'apogée de 1 mm. Cette déformation est mise en oeuvre par emboutissage de la tôle de la même façon que pour la mise en forme classique du couvercle.

En augmentant la valeur de L au-delà de cet objectif, on garantit encore mieux le résultat obtenu en s'affranchissant d'éventuels défauts de planéité du tablier.

L'ensemble est particulièrement efficace pour éviter l'apparition de fissures dans des zones de surcontraintes ici éliminées. Evitant ces déformations, les efforts alternés disparaissent et ainsi l'apparition de fissures par contraintes alternées dans les zones de surcontrainte.

Outre une augmentation de la fiabilité et de la durée de vie du servomoteur, une telle disposition permet une réduction du poids de l'ensemble en évitant l'ajout de renforts.

## Revendications

1. Servomoteur pneumatique d'assistance au freinage pour véhicule automobile comprenant un couvercle (100) présentant une zone de fixation (115, 117) et au moins un organe de fixation (200) du couvercle à un support **caractérisé en ce que** la zone de fixation (115, 117) a une forme non plane et est déformable élastiquement pour prendre une forme plane.

2. Servomoteur selon la revendication 1, **caractérisé en ce que** le ou les organe(s) de fixation est (sont) constitué(s) par un ou des tirant(s)(200) attaché(s) à ce couvercle (100), et le couvercle (100) présente un plateau central (110) comportant une bande centrale plane (117), d'où émerge au moins un tirant (200), un premier et un deuxième versants (115) à pente relevée de part et d'autre de la bande centrale (117) de sorte qu'une traction de fixation sur le tirant (200) produit un aplatissement de ce plateau (110), produisant ainsi une précontrainte dans le couvercle (100).

3. Servomoteur selon la revendication 2, **caractérisé en ce qu'**il présente au moins deux tirants (200), et **en ce que** les pentes latérales opposées (115) se relèvent progressivement dans une direction perpendiculaire à celle passant par les deux tirants (200).

4. Servomoteur selon la revendication 3, **caractérisé en ce que** le couvercle présente une forme composée principalement du plateau central (110) entouré par une paroi tronconique (120), et **en ce que** les versants (115) et la bande centrale (117) forment une gorge (115, 117) transversale à fond plat.

5. Servomoteur selon la revendication 4, **caractérisé en ce que** la gorge (115, 117) présente un fond plat (117).

6. Procédé de montage d'un servomoteur pneumatique d'assistance au freinage sur un support d'un véhicule automobile, le procédé comprenant les étapes consistant à :
- fournir un servomoteur comprenant un couvercle (100) ayant une première forme ;
- fixer le couvercle (100) au support de façon à lui donner une deuxième forme différente de la première forme afin de générer une précontrainte dans le couvercle (100).

7. Procédé de montage selon la revendication 6, **caractérisé en ce qu'**il inclut les étapes consistant à :
a) fournir un couvercle (100) qui présente, en face externe, un plateau central (110) muni d'un premier et d'un second versants à pente relevée de part et d'autre d'une bande centrale (117) ;
b) fixer ce tirant (200) sur le support en générant, par traction de fixation sur ce tirant (200), un aplatissement de la paroi de cavité (115, 117) en direction du support, de sorte que la précontrainte prend place dans le couvercle fixé.

8. Servomoteur pneumatique d'assistance au freinage selon l'une quelconque des revendications 1 à 5 comprenant un support et un couvercle (100), **caractérisé en ce que** le support et le couvercle sont agencés de sorte qu'une fixation du couvercle (100) au support donne au couvercle (100) une forme finale après fixation différente d'une forme initiale du couvercle (100) avant fixation.

9. Servomoteur pneumatique d'assistance au freinage, selon l'une quelconque des revendications 1, 2, 3, 4, 5, 8 comprenant un support et un couvercle (100) fixé au support, **caractérisé en ce que** le couvercle (100) présente une précontrainte de sorte qu'il présente une forme primaire lorsqu'il est fixé au support et qu'il prend spontanément une forme secondaire différente de la forme primaire lorsqu'on le démonte du support.

## Claims

1. Pneumatic brake booster for a motor vehicle comprising a casing (100) that exhibits a region of attachment (115, 117) and at least one member (200) for attaching the casing to a mount, **characterized in that** the region of attachment (115, 117) has a non-planar form and is elastically deformable in order to adopt a planar form.

2. Booster according to Claim 1, **characterized in that** the attachment member or members consists or consist of one or more through-bolt(s) (200) attached to this casing (100), and the casing (100) has a central plateau (110) comprising a planar central strip (117) from which at least one through-bolt (200) emerges, a first and a second upwardly sloping side (115) one on each side of the central strip (117) such that tension of attachment on the through-bolt (200) causes this plateau (110) to flatten, thus preloading the casing (100).

3. Booster according to Claim 2, **characterized in that** it has at least two through-bolts (200), and **in that** the opposing side slopes (115) rise gently in a direction perpendicular to the direction passing through the two through-bolts (200).

4. Booster according to Claim 3, **characterized in that** the casing has a shape made up mainly of the central plateau (110) surrounded by a frustoconical wall (120), and **in that** the sloping sides (115) and the central strip (117) form a transverse flat-bottomed gorge (115, 117).

5. Booster according to Claim 4, **characterized in that** the gorge (115, 117) has a flat bottom (117).

6. Method of assembling a pneumatic brake booster on a mount belonging to a motor vehicle, the method comprising the steps involving:
- providing a booster comprising a casing (100) that has a first shape;
- attaching the casing (100) to the mount in such a way as to give it a second shape different from the first shape in order to introduce preload into the casing (100).

7. Method of assembly according to Claim 6, **characterized in that** it includes the steps involving:
a) providing a casing (100) which, on its external face, has a central plateau (110) equipped with a first and second upwardly sloping side one on each side of a central strip (117);
b) attaching this through-bolt (200) to the mount thereby causing, through the tension of attachment to this through-bolt (200), a flattening of the cavity wall (115, 117) towards the support such that the preload is introduced into the fixed casing.

8. Pneumatic brake booster according to any one of Claims 1 to 5, comprising a mount and a casing (100), **characterized in that** the mount and the casing are arranged in such a way that attaching the casing (100) to the mount gives the casing (100) a final shape after attachment that differs from an initial shape of the casing (100) prior to attachment.

9. Pneumatic brake booster according to any one of Claims 1, 2, 3, 4, 5, 8 comprising a mount and a casing (100) attached to the mount, **characterized in that** the casing (100) has a preload such that it has a primary shape when attached to the mount and spontaneously adopts a secondary shape different from the primary shape when removed from the mount.

## Patentansprüche

1. Pneumatischer Servomotor zur Bremsunterstützung für ein Kraftfahrzeug, mit einem Deckel (100), der einen Befestigungsbereich (115, 117) und mindestens ein Organ (200) zum Befestigen des Deckels an einem Träger, **dadurch gekennzeichnet, dass** der Befestigungsbereich (115, 117) eine nicht ebene Form hat und elastisch verformbar ist, um eine ebene Form einzunehmen.

2. Servomotor nach Anspruch 1, **dadurch gekennzeichnet, dass** das Befestigungsorgan bzw. die Befestigungsorgane aus einer Zugstange oder mehreren Zugstangen (200) besteht/bestehen, die an diesem Deckel (100) eingehängt ist/sind, und der Deckel (100) eine zentrale Platte (110) aufweist, die einen ebenen zentralen Streifen (117) umfasst, aus welchem mindestens eine Zugstange (200) sowie eine erste und eine zweite Schräge (115) mit hochgezogener Neigung auf der einen bzw. anderen Seite des zentralen Streifens (117) austreten, so dass ein Befestigungszug auf die Zugstange (200) eine Abflachung dieser Platte (110) bewirkt, wobei auf diese Weise eine Vorspannung im Deckel (100) bewirkt wird.

3. Servomotor nach Anspruch 2, **dadurch gekennzeichnet, dass** er mindestens zwei Zugstangen (200) aufweist und dass die entgegengesetzten seitlichen Schrägen (115) sich allmählich in eine Richtung hochstellen, die zu derjenigen senkrecht ist, die durch die zwei Zugstangen (200) hindurchgeht.

4. Servomotor nach Anspruch 3, **dadurch gekennzeichnet, dass** der Deckel eine Form aufweist, die hauptsächlich aus der zentralen Platte (110) besteht, die von einer kegelstumpfförmigen Wand (120) umgeben ist, und dass die Schrägen (115) und der zentrale Streifen (117) eine querliegende Nut (115, 117) mit flachem Boden bilden.

5. Servomotor nach Anspruch 4, **dadurch gekennzeichnet, dass** die Nut (115, 117) einen flachen Boden (117) aufweist.

6. Verfahren zum Anbringen eines pneumatischen Servomotors zur Bremsunterstützung an einem Träger eines Kraftfahrzeugs, wobei das Verfahren folgende Schritte aufweist:
- Bereitstellung eines Servomotors mit einem Deckel (100), der eine erste Form aufweist;
- Befestigung des Deckels (100) am Träger, so dass er eine zweite Form erhält, die sich von der ersten Form unterscheidet, um eine Vorspannung im Deckel (100) zu bewirken.

7. Anbringungsverfahren nach Anspruch 6, **dadurch gekennzeichnet, dass** es folgende Schritte umfasst:
a) Bereitstellung eines Deckels (100), der auf der Außenseite eine zentrale Platte (110) aufweist, die mit einer ersten und einer zweiten Schräge mit hochgezogener Neigung auf der einen bzw. anderen Seite eines zentralen Streifens (117) versehen ist;
b) Befestigung dieser Zugstange (200) am Träger, wobei eine Abflachung der Wand (115, 117) der Vertiefung durch Befestigungszug auf diese Stange (200) in Richtung des Trägers erzeugt wird, so dass die Vorspannung sich im befestigten Deckel einstellt.

8. Pneumatischer Servomotor zur Bremsunterstützung nach einem der Ansprüche 1 bis 5, mit einem Träger und einem Deckel (100), **dadurch gekennzeichnet, dass** der Träger und der Deckel so angeordnet sind, dass eine Befestigung des Deckels (100) am Träger dem Deckel (100) eine endgültige Form nach der Befestigung verleiht, die sich von einer ursprünglichen Form des Deckels (100) vor der Befestigung unterscheidet.

9. Pneumatischer Servomotor zur Bremsunterstützung nach einem der Ansprüche 1, 2, 3, 4, 5, 8, mit einem Träger und einem am Träger befestigten Deckel (100), **dadurch gekennzeichnet, dass** der Deckel (100) eine Vorspannung aufweist, so dass er eine primäre Form aufweist, wenn er am Träger befestigt ist, und dass er spontan eine von der primären Form unterschiedliche sekundäre Form einnimmt, wenn er vom Träger abgebaut wird.
